# EUROPEAN PATENT SPECIFICATION

(11) **EP 1 224 864 B1**
(45) Date of publication and mention of the grant of the patent: **02.04.2003**
(21) Application number: 01830028.5
(22) Date of filing: 19.01.2001
(51) Int. Cl.: A01N 1/02

(54) **A method for preserving explanted corneas**
Verfahren zur Konservierung von explantierte Korneas
Procédé pour conserver les cornées explantés

(43) Date of publication of application: 24.07.2002
(73) Proprietor: AL.CHI.MI.A. S.R.L., 35020 Ponte S.Nicolo' (Padova) (IT)
(72) Inventor: Beccaro, Mauro, 35010 Cadoneghe (Padova) (IT); Bettini, Enrico, 30032 Fiesso D'Artico (Venezia) (IT)
(74) Representative: Lanzoni, Luciano

(56) References cited:
- US-A- 6 162 642
- J.SZAFLIK ET.AL: "Corneal Storage Methods" TRANSPLANTATION PROCEEDINGS, vol. 32, 2000, pages 1424-1425, XP001005500

## Description

The present invention relates to a method for preserving explanted corneas of the type comprising the characteristics expressed in the preamble to Claim 1.

Cornea transplanting is a commonly performed operation, entailing no particular difficulties.

Like all transplants, the cornea transplant is performed in three successive phases: explanting the cornea from the donor, preserving the cornea and implanting it in the patient.

Currently, the preservation phase has a duration that varies between one and six weeks, and it allows to conduct all necessary exams on the corneas to verify the absence of risks of infection for the receiving patient.

At present two different techniques are used for preserving corneas.

The first technique provides for two distinct phases.

In the first phase, the cornea is placed in a container where a preserving fluid is present which contains substances suitable for physiologically preserving the cornea, as well as nutrient elements which can be assimilated by the cells constituting the cornea (such as water, vitamins, amino acids, salts, antibiotics).

The container is then placed in an environment at controlled temperature, which maintains the temperature of the fluid at 31 °C.

In such conditions the cornea can be preserved for time intervals of up to 4-6 weeks, because it is at an optimal temperature for its metabolic processes, and at the same time it has available what it needs to feed itself.

Since the substances present in the cornea are different from those present in the fluid, during the first phase water is absorbed osmotically by the cornea which expands, increasing its thickness.

This expansion of the cornea, however, is an undesired effect, because the transparency of the cornea decreases as its thickness increases.

Before proceeding with implantation in a patient, a second phase is provided for returning the cornea to a correct thickness (usually, about 500-600 mm).

During the second phase, the cornea is placed in a second container in which a fluid is present that is similar to the previous one, except for the additional presence of a highly hydrophilic substance, which causes an osmotic flow that is reversed relative to the previous one, and thus the outflow of water from the cornea.

Currently, the most widely used hydrophilic substances for this purpose are polymers (for instance dextran - a polysaccharide with high molecular weight), and the dehydration phase can last from twelve hours to a few days.

Transplantation Proceedings, Vol.32(6), 2000, pages 1424-1425 and British Journal of Ophthalmology, Vol81(7), 1997, pages 523-525 both describe the use of dextran in the preservation of corneas. US-A-6162642 describes the use of hydroxyethyl starch as a substitute for dextran in such methods.

The second known technique instead allows the corneas to be preserved for time intervals not exceeding two weeks.

It provides for the cornea to be immersed in a fluid containing both substances (such as water, vitamins, amino acids, salts, antibiotics) suitable for the physiological preservation of the cornea itself, and a strongly hydrophilic substance to prevent the absorption of water by the cornea.

The fluid is then stored in an environment with a constant temperature of 4°C. In such conditions the cornea is at a temperature that greatly slows its metabolic processes, almost to the point of stopping them, so that the fluid used in this second known technique is poor in nutrient elements, unlike the one used in the first technique described.

In this second case as well, the most commonly used hydrophilic substances are constituted by polymers, such as dextran.

The two known techniques described above, however, have a series of drawbacks.

A first drawback, shared by both, is constituted by the less than complete biological compatibility between the hydrophilic substances known to date and organic cells. The cells that constitute the cornea tend to absorb the hydrophilic substance, and are able to metabolise it only partially. The part that is not metabolised, however, is toxic for the cells and it leads to their deterioration in a time intervals that varies depending on preservation temperature.

In particular, in the first preservation technique described above, deterioration occurs faster than in the second one, because at the higher preservation temperature the metabolic processes of the cells are much more active.

This means that, whilst corneas preserved in accordance with the second preservation technique can be preserved in good condition (although they are in contact with the hydrophilic substance) even for fifteen days, corneas preserved in accordance with the first technique described, once they are placed in the dehydration fluid, become unusable after at most 5-7 days.

Secondly, both described techniques need an accurate precision in maintaining the preservation temperature, respectively at 31°C and at 4°C.

Thirdly, the first described technique has the severe limitation provided by the expansion of the corneas. As stated previously, during the first phase of the preservation method, the cornea absorbs water, thereby expanding.

This undesired effect contributes to limit the preservation period of the corneas to no more than four/six weeks.

In addition to the damages caused by the expansion itself, it should be noted that the more the cornea expands, the longer the dehydration phase in which the cornea is in contact with the hydrophilic substance shall have to be, with the harmful effects described above.

In this situation, the technical task constituting the basis for the present invention is to provide a method for preserving explanted corneas which overcomes the aforementioned drawbacks.

Specifically, a technical task of the present invention is to provide a method for the preservation of explanted corneas that allows a preservation of the cornea which does not cause its expansion and which, at the same time, does not expose the cornea to the harmful effects deriving from the hydrophilic substances present in the preserving fluid.

The specified technical task and the indicated aims are substantially achieved by a method for preserving explanted corneas, according to the description contained in the claims set out below.

Further features and advantages of the invention shall become more readily apparent from the detailed description of a preferred, but not exclusive, embodiment of a method for preserving explanted corneas, provided hereafter.

The method for preserving explanted corneas comprises first of all the operative phase of preparing a bath of a preserving fluid.

During this phase, a plurality of substances suitable for the physiological preservation of the cornea are mixed to water.

Such substances, commonly used for this purpose are, among others, nutrient substances, vitamins, amino acids, salts and antibiotics.

In the preferred embodiment of the method, a hydrophilic substance is then added to the preserving fluid.

The substance can be added pure or dissolved in water or in another solvent.

The hydrophilic substance can also be a substance that is commonly used for this purpose, such as a polysaccharide with high molecular weight, like dextran.

This phase is conducted in such a way that the hydrophilic substance is diffused only in a delimited portion of the bath.

This can be obtained in several ways.

A first possible way entails separating the preserving fluid into a first and a second part with means that allow the passage of the water but not of the hydrophilic substance, and subsequently to add the hydrophilic substance only to the first part of the preserving fluid.

For instance, one can use for the preserving fluid a container divided in two parts by a divider element (membrane or rigid wall) having holes such as to allow only the passage of substances with lesser size than a predetermined value.

Alternatively, the diffusion of the hydrophilic substance only in a delimited portion of the bath can be obtained by enclosing the hydrophilic substance in a container that allows the passage of water but not the passage of the hydrophilic substance, and subsequently immersing said container into the bath.

Depending on requirements, the hydrophilic substance can be preventively dissolved with a solvent in the container.

In tests carried out, it has been verified that dialysis tubes are valid containers, for they are calibrated to allow the passage only of substances of relatively small size.

If, for instance, the hydrophilic substance employed is dextran, with a molecular weight of 500000, and dialysis tubes are used that are permeable to substances with a molecular weight not exceeding 12000-14000, the number of molecules of hydrophilic substances that can exit from the delimited portion of bath in which they should remain confined is minimised.

The order of execution of the phases described thus far is a preferred but not constraining order, as it is possible to switch the difference phases, for instance adding to the water first the hydrophilic substance and then the substances for physiological preservation.

Similarly, the separation of the fluid in two parts can be effected in any manner and at any time, as long as it takes place before adding the hydrophilic substance to the preserving fluid.

Advantageously, after the addition of the hydrophilic substance one waits for osmotic equilibrium between the two parts of the preserving fluid to be reached.

Once the equilibrium is reached, the cornea to be preserved is immersed into the preserving fluid, outside the delimited portion in which the hydrophilic substance is diffused, so that the cornea and the hydrophilic substance are immersed in the same bath without being in direct contact with each other.

Advantageously, the cornea can be suspended inside the bath in such a way as to be in contact exclusively with the bath fluid.

At this point the fluid containing the cornea is maintained at a preservation temperature which, preferably, ranges between 4°C and 31°C. Preferably, the bath is brought to the preservation temperature before the cornea is immersed into it.

In particular, the preservation fluid can be maintained at a constant temperature of 4°C or of 31°C, following the preservation procedures used today and related to the prior art.

The dosage of the quantity of hydrophilic substance in the preserving fluid depends on the substance used and on the preservation temperature, and is adjusted on each occasion.

By way of non limiting example, a description is now provided of a possible way to implement the method of the present invention.

First of all, a solution is prepared of a polysaccharide with high molecular weight (for instance, 2,3,4-tri O methyl D glucose) in distilled water, mixing 36 g of polysaccharide with 100 ml of water. 10 ml of this solution are then placed in a container constituted by a dialysis tube made of cellulose acetate having a diameter of 20 mm, a length of 7 cm, and a cut-off of 12000-14000.

The tube is immersed into a bottle containing 50 ml of a preserving fluid containing sugars, amino acids, vitamins, trophic factors, antibiotics and a pH indicator.

The bottle and the tube are then let stand for about 12 hours at ambient temperature until osmotic equilibrium is reached between the fluid in the bottle and the solution in the dialysis tube.

At this point the cornea to be preserved is immersed in the fluid bath and the bottle is stored in an incubator that maintains temperature at 31°C.

This method has been experimentally applied to a cornea whose original thickness was 580"10 mm, and after a preservation period of 29 days the thickness of the cornea was found to have changed to 600"20 mm, quite a negligible increase.

It was also observed that the cornea had not been harmed by the possible absorption of the hydrophilic substance, and in fact it was declared suitable for transplanting.

The present invention thus achieves important advantages.

In the first place, it allows to prevent the expansion of the cornea, although it is immersed for relatively long time intervals in a preserving fluid bath at 31°C.

Secondly, while using traditional hydrophilic substances, the invention allows to avoid the damages stemming from contact between the cornea and said hydrophilic substances.

Thirdly, with an appropriate selection of hydrophilic substance concentration, the method allows to set preservation temperature to any value in the interval ranging from 0 °C and 37 °C, and in particular in the temperature range delimited by the two values of 4 °C and 31 °C, used in the prior art.

It should also be noted that the method of the present invention is relatively easy to execute.

The invention thus conceived can be subject to numerous modifications and variations, without thereby departing from the scope of the inventive concept.

All components can be replaced by technically equivalent elements and in practice all materials employed, as well as the shapes, configurations and dimensions of the various components necessary for implementing the method may be any at all, depending on requirements.

## Claims

1. A method for preserving explanted corneas comprising the operative phases of:
adding a hydrophilic substance to a bath of a preserving fluid;
subsequently, fully immersing a cornea in the preserving fluid bath; and
maintaining the fluid bath containing the cornea at a preservation temperature;
**characterised in that** the operative phase of adding a hydrophilic substance to the preserving fluid bath is effected by diffusing the hydrophilic substance only in a delimited portion of the bath, and **in that** said cornea is immersed in the preserving fluid bath outside said delimited portion.

2. A method as claimed in claim 1 **characterised in that** the diffusion of the hydrophilic substance only in a delimited portion of the bath is obtained by separating the preserving fluid into a first and a second part with means that allow the passage of water but not the passage of the hydrophilic substance, and adding the hydrophilic substance only to said first part of the preserving fluid.

3. A method as claimed in claim 1 **characterised in that** the diffusion of the hydrophilic substance only in a delimited portion of the bath is obtained by enclosing the hydrophilic substance in a container that allows the passage of water but not the passage of the hydrophilic substance, and subsequently immersing said container into the bath.

4. A method as claimed in any of the claims from 1 to 3 **characterised in that** the operative phase of maintaining the fluid bath at a preservation temperature is effected at a temperature ranging between 0°C and 37°C.

5. A method as claimed in any of the claims from 1 to 3 **characterised in that** the operative phase of maintaining the fluid bath at a preservation temperature is effected at a temperature ranging between 4°C and 31°C.

6. A method as claimed in any of the claims from 1 to 3 **characterised in that** the operative phase of maintaining the fluid bath at a preservation temperature is effected at a temperature of 4°C.

7. A method as claimed in any of the claims from 1 to 3 **characterised in that** the operative phase of maintaining the fluid bath at a preservation temperature is effected at a temperature of 31°C.

8. A method as claimed in any of the previous claims, **characterised in that** it further comprises the operative phase of preparing the bath of preserving fluid.

9. A method as claimed in claim 8 **characterised in that** said operative phase of preparing the preserving fluid bath comprises the operative phase of mixing to some water a plurality of substances suited for the physiological preservation of the cornea itself.

10. A method as claimed in claim 8 **characterised in that** said operative phase of preparing the preserving fluid bath comprises the operative phase of mixing to some water nutrient substances, vitamins, amino acids, salts and antibiotics.

11. A method as claimed in any of the previous claims, **characterised in that** it further comprises the operative phase of letting the fluid bath reach osmotic equilibrium, after said operative phase of adding the hydrophilic substance to the bath diffusing it only in a delimited portion of the bath itself.

12. A method as claimed in claim 1 or subsequent claims, **characterised in that** said hydrophilic substance is a polysaccharide with high molecular weight.

13. A method as claimed in claim 12 **characterised in that** said polysaccharide with high molecular weight is dextran.

## Patentansprüche

1. Verfahren zur Konservierung von explantierten Corneas, enthaltend die folgenden Phasen:
Zugabe einer hydrophilen Substanz zu einem Bad aus einer Konservierungsflüssigkeit;
anschliessendes volles Eintauchen einer Cornea in die Konservierungsflüssigkeit; und
das Halten des die Cornea enthaltenden Flüssigkeitsbades auf einer Konservierungstemperatur;
**dadurch gekennzeichnet, dass** die Phase der Zugabe einer hydrophilen Substanz zu dem konservierenden Flüssigkeitsbad durch die Diffusion der hydrophilen Substanz nur in einem begrenzten Abschnitt des Bades erfolgt, und dadurch, dass die genannte Cornea in das konservierende Flüssigkeitsbad ausserhalb des genannten begrenzten Abschnittes eingetaucht ist.

2. Verfahren nach Patentanspruch 1, **dadurch gekennzeichnet, dass** die Diffusion der hydrophilen Substanz in nur einem begrenzten Abschnitt des Bades durch das Trennen der Konservierungsflüssigkeit in einen ersten und einen zweiten Teil erhalten ist, und zwar mit Hilfe von Mitteln, die den Durchlass von Wasser erlauben, nicht aber den Durchlass der hydrophilen Substanz, und durch die Zugabe der hydrophilen Substanz zu nur dem genannten ersten Teil der Konservierungsflüssigkeit.

3. Verfahren nach Patentanspruch 1, **dadurch gekennzeichnet, dass** die Diffusion der hydrophilen Substanz in nur einem begrenzten Abschnitt des Bades durch das Einschliessen der hydrophilen Substanz in einem Behälter erhalten ist, welcher den Durchlass von Wasser, nicht aber den Durchlass der hydrophilen Substanz erlaubt, und folglich durch Eintauchen des genannten Behälters in das Bad.

4. Verfahren nach einem beliebigen der Patentansprüche von 1 bis 3, **dadurch gekennzeichnet, dass** die Phase des Haltens des Flüssigkeitsbades auf einer Konservierungstemperatur in einem Temperaturbereich zwischen 0°C und 37°C erfolgt.

5. Verfahren nach einem beliebigen der Patentansprüche von 1 bis 3, **dadurch gekennzeichnet, dass** die Phase des Haltens des Flüssigkeitsbades auf einer Konservierungstemperatur in einem Temperaturbereich zwischen 4°C und 37°C erfolgt.

6. Verfahren nach einem beliebigen der Patentansprüche von 1 bis 3, **dadurch gekennzeichnet, dass** die Phase des Haltens des Flüssigkeitsbades auf einer Konservierungstemperatur bei einer Temperatur von 4°C erfolgt.

7. Verfahren nach einem beliebigen der Patentansprüche von 1 bis 3, **dadurch gekennzeichnet, dass** die Phase des Haltens des Flüssigkeitsbades auf einer Konservierungstemperatur bei einer Temperatur von 31°C erfolgt.

8. Verfahren nach einem beliebigen der vorstehenden Patentansprüche, **dadurch gekennzeichnet, dass** es weiter die Phase der Zubereitung des Bades mit der Konservierungsflüssigkeit enthält.

9. Verfahren nach Patentanspruch 8, **dadurch gekennzeichnet, dass** die genannte Phase der Zubereitung des konservierenden Flüssigkeitsbades die Phase des Beimischens zum Wasser von einer Anzahl von Substanzen enthält, die zur physiologischen Konservierung der Cornea selbst geeignet sind.

10. Verfahren nach Patentanspruch 8, **dadurch gekennzeichnet, dass** die genannte Phase der Zubereitung des konservierenden Flüssigkeitsbades die Phase des Beimischens zum Wasser von Nährsubstanzen, Vitaminen, Aminosäuren, Salzen und Antibiotika enthält.

11. Verfahren nach einem beliebigen der vorstehenden Patentansprüche, **dadurch gekennzeichnet, dass** es weiter die Phase enthält, in welcher das Flüssigkeitsbad das osmotische Gleichgewicht erreicht, nach welcher dann die genannte Phase der Zugabe der hydrophilen Substanz zu dem Bad erfolgt, wobei letztere nur in einem begrenzten Abschnitt des Bades selbst verteilt wird.

12. Verfahren nach Patentanspruch 1 oder den nachfolgenden Patentansprüchen, **dadurch gekennzeichnet, dass** die genannte hydrophile Substanz ein Polysaccharid von hohem Molekulargewicht ist.

13. Verfahren nach Patentanspruch 12, **dadurch gekennzeichnet, dass** das genannte Polysaccharid von hohem Molekulargewicht Dextran ist.

## Revendications

1. Procédé pour conserver les cornées explantées qui inclut les étapes suivantes :
ajouter une substance hydrophile à un bain de liquide de conservation ; immerger complètement une cornée dans le bain de liquide de conservation et
maintenir le bain de liquide contenant la cornée à une température de conservation ; **caractérisé en ce que** l'étape durant laquelle une substance hydrophile est ajoutée au bain de liquide de conservation consiste à répandre la substance hydrophile uniquement dans une portion délimitée du bain et **en ce que** ladite cornée est immergée dans le bain de liquide de conservation à l'extérieur de ladite portion délimitée.

2. Procédé selon la revendication 1 **caractérisé en ce que** la diffusion de la substance hydrophile uniquement dans une portion délimitée du bain est obtenue en séparant le liquide de conservation en une première et une seconde partie avec des moyens qui permettent le passage de l'eau mais pas le passage de la substance hydrophile et en ajoutant la substance hydrophile uniquement dans ladite première partie du liquide de conservation.

3. Procédé selon la revendication 1, **caractérisé en ce que** la diffusion de la substance hydrophile uniquement dans une portion délimitée du bain s'obtient en mettant la substance hydrophile dans un récipient qui permet le passage de l'eau mais pas le passage de la substance hydrophile, et en immergeant ensuite ledit récipient dans le bain.

4. Procédé selon les revendications de 1 à 3 **caractérisé en ce que** l'étape de conservation du bain de liquide à une température de conservation est réalisée à une température allant de 0°C à 37°C.

5. Procédé selon les revendications de 1 à 3 **caractérisé en ce que** l'étape de conservation du bain de liquide à une température de conservation est réalisée à une température allant de 4°C à 31°C.

6. Procédé selon les revendications de 1 à 3 **caractérisé en ce que** l'étape de conservation du bain de liquide à une température de conservation est réalisée à une température de 4°C.

7. Procédé selon les revendications de 1 à 3 **caractérisé en ce que** l'étape de conservation du bain de liquide à une température de conservation est réalisée à une température de 31°C.

8. Procédé selon toutes les revendications précédentes **caractérisé en ce qu'**il inclut également l'étape consistant à préparer le bain de liquide de conservation.

9. Procédé selon la revendication 8 **caractérisé en ce que** l'étape consistant à préparer le bain de liquide de conservation inclut l'étape pendant laquelle plusieurs substances appropriées à la conservation physiologique de la cornée sont mélangées à un peu d'eau.

10. Procédé selon la revendication 8 **caractérisé en ce que** l'étape consistant à préparer le bain de liquide inclut l'étape pendant laquelle des substances nutritives, vitamines, acides aminés, sels et antibiotiques sont mélangés à un peu d'eau.

11. Procédé selon toutes les revendications précédentes **caractérisé en ce qu'**il inclut également l'étape durant laquelle on laisse le bain de liquide trouver un équilibre osmotique, après ladite étape d'adjonction de la substance hydrophile au bain répandue uniquement dans une portion délimitée du bain.

12. Procédé selon la revendication 1 ou suivantes, **caractérisé en ce que** la substance hydrophile est un polysaccharide à haut poids moléculaire.

13. Procédé selon la revendication 12 **caractérisé en ce que** le polysaccharide à haut poids moléculaire est dextran.
